Europäisches Patentamt

European Patent Office

Office européen des brevets

(11) Veröffentlichungsnummer: **0 030 002**
**B1**

(12) # EUROPÄISCHE PATENTSCHRIFT

(45) Veröffentlichungstag der Patentschrift:
**12.10.83**

(21) Anmeldenummer: **80107388.3**

(22) Anmeldetag: **26.11.80**

(51) Int. Cl.³: **B 62 D 55/08**

(54) Gleisketten-Laufwerk.

(30) Priorität: **30.11.79 DE 2948229**

(43) Veröffentlichungstag der Anmeldung:
**10.06.81 Patentblatt 81/23**

(45) Bekanntmachung des Hinweises auf die Patenterteilung:
**12.10.83 Patentblatt 83/41**

(84) Benannte Vertragsstaaten:
**AT BE CH FR GB IT LI LU NL SE**

(56) Entgegenhaltungen:
**DE-B-2 138 600**

(73) Patentinhaber: **Krauss-Maffei Aktiengesellschaft,
Krauss-Maffei-Strasse 2, D-8000 München 50 (DE)**

(72) Erfinder: **Seit, Horst, Steinbach 28, D-8086 Moorenweis
(DE)**

ACTORUM AG

## Gleisketten-Laufwerk

Die Erfindung bezieht sich auf ein Gleisketten-Laufwerk gemäss Oberbegriff des Hauptanspruchs.

Bei einem Gleisketten-Laufwerk dieser Art, wie es beispielsweise aus der deutschen Auslegeschrift 2 138 600 bekannt ist, können die sich beim Einfedern der Laufrollen ergebenden überschüssigen Kettenlängen vor dem Umlenkrad oder dem Triebrad zur Bauchbildung führen, wodurch das lose Kettentrum beim Eingleisen in die Laufrollen einem Zufallsspiel überlassen bleibt. Treten in einem solchen Falle Querkräfte zum Laufwerk auf, so kann dies zum Ausgleisen und damit Abwerfen der Gleiskette führen.

Es sind zwar aktiv wirkende Spannvorrichtungen bekannt, durch die die Gleiskette auf mechanischem oder hydraulischem Wege gespannt wird, bei den immer höheren taktischen Anforderungen an Kettenfahrzeuge hinsichtlich Beschleuningung, Abbremsvermögen und Geschwindigkeit, lässt sich die Bildung von losen Kettenbereichen mit den bekannten Spannvorrichtungen nicht verhindern, will man die Kette nicht mit einer übermässigen Vorspannung belasten. Darüber hinaus besteht die Forderung, dass das Laufwerk eines Kettenfahrzeugs auch für Rückwärtsfahrt gute Laufeigenschaften zeigt. Es muss beispielsweise in der Lage sein, bei grösstmöglichem Beschleunigungs- und Abbremsvermögen aus einer Deckung zu fahren, einen Schuss abzugeben und in Rückwärtsfahrt hoher Geschwindigkeit wieder in die Ausgangsstellung zurückzukehren, ohne dass das Fahrwerk dabei überbeansprucht wird oder unkontrollierbare Bewegungen auf das Fahrzeug überträgt.

Ferner kann bei Kettenfahrzeugen, bei denen das Triebrad im Fahrzeugbug angeordnet ist eine herkömmliche Spannvorrichtung auch bei geringen Beschleunigungen und Geschwindigkeiten nur in sehr begrenzten Masse wirksam werden. Da bei derartigen Fahrzeugen die Spannvorrichtung am Umlenkrad im Fahrzeugheck angeordnet ist, lässt sich damit nur die durch die Einfederung der hinteren Laufräder ergebende Kettenlängung kompensieren. Auf einen durch Einfederung der vorderen Laufräder am vom Triebrand ablaufenden Kettentrum sich bildenden Bauch kann die Spannvorrichtung nicht wirken.

Der Erfindung liegt daher die Aufgabe zugrunde, ein Gleisketten-Laufwerk zu schaffen, das unabhängig von der Anordnung des Triebrades und der Fahrtrichtung sowie den jeweils herrschenden Beschleunigungen und Geschwindigkeiten einen sicheren Ausgleich der durch den Einfederungsvorgang der Laufräder sich ergebenden Kettenlängung gewährleistet.

Diese Aufgabe wird durch ein nach dem Kennzeichen des Hauptanspruchs ausgestaltetes Gleisketten-Laufwerk gelöst. Dabei wird beim Entfederungsvorgang in etwa soviel Kettenlänge nach oben verbraucht, wie unten freigegeben wird. Unabhängig vom genutzten Federweg der Laufräder kann damit eine weitgehend konstante Kettenspannung eingehalten werden, wobei geringfügig auftrende Ungenauigkeiten im Kettenlängenausgleich durch das Federungsvermögen der nicht eingefederten Laufrollen kompensiert weren können.

Ein besonderer Vorteil ergibt sich insbesondere bei frontgetriebenen Fahrzeugen, bei denen das obere Kettentrum durch die vom Triebrad herrührende Zugkraft gespannt wird. Die Spannung dieses Kettenteils wirkt dem einfedernden Laufrad entgegen, so dass dessen Auslenkung eine Federungsprogression erfährt, ein im Sinne moderner Laufwerksauslegungen angestrebter Effekt.

Die Kompensation überschüssiger Kettenlänge durch übergrosse Laufrollen erfordert zwar oberhalb des oberen Kettentrums einen verhältnismässig grossen Raum für die mit der Gleiskette einfedernden Laufrollen, dieser kann jedoch wesentlich dadurch verringert werden, dass das Gleisketten-Laufwerk entsprechend den Merkmalen des Anspruchs 2 ausgestaltet wird. Auf Grund der Tatsache, dass dabei das obere Kettentrum im eingefederten Zustand des Eckrades durch die Umlenkvorrichtung wieder nach unter geführt wird, lässt sich bei geringer Bauhöhe des Gesamtlaufwerks besonders viel überschüssige Kettenlänge kompensieren. In dem zwischen den Umlenkvorrichtungen befindlichen Raum oberhalb der Gleiskette kann die Fahrzeugwanne übergreifend erweitert sein, wodurch sich einerseits ein grösserer Innenraum zur Unterbringung diverser Einbauten und andererseits eine breitere obere Fläche zur Anordnung eines Drehturms erzielen lässt.

Um sowohl bei Vorwärts- als auch bei Rückwärtsfahrt ein sogenanntes Einspiessen der Tragarme der Eckräder zu verhindern, ist im statischen Belastungszustand der Achsmittelpunkt des Eckrades oberhalb des Anlenkpunktes des Tragarms an der Fahrzeugwanne angeordnet, wobei die Tragarme nach aussen gerichet sind. Durch diese Massnahme kann das Eckrad auch sehr nahe an das Triebrad bzw. Leit- oder Umlenkrad herangeschoben werden, was, abgesehen von günstiger Raumausnutzung, noch den Vorteil eines steilen Kettenanstiegwinkels ergibt. Dabei kann das Eckrad sogar bis zu einem Überschneidungsbereich mit den Ketten-Zahnkränzen des Triebrades einschwenken.

In einer bevorzugten Ausführungsform sind die zwischen den Eckrädern befindlichen Laufrollen auf an den Tragarmen angelenkten Laufrollenwiegen gelagert, wobei die Tragarme der Laufrollen und die der Eckräder einander entsprechende Federungsvorrichtungen aufweisen. Auf Grund der Tatsache, dass ein Tragarm über die Laufrollenwiege auf jeweils zwei Laufrollenpaare wirkt, ergibt sich im Laufwerk-Mittelbereich eine weiche Federungskennlinie, wohingegen an den Eckbereichen, an denen die Eckräder mit nur einem Tragarm angeordnet sind eine harte Federung vorliegt. Diese Aufteilung der Federungseigenschaften führt insbesondere im Hinblick auf das Nickverhalten eines Kettenfahrzeugs zu einem ausgewogenen Laufwerk, wobei sich der zusätzliche Vorteil ergibt, dass sämtliche Tragarme sowie deren Federungselemente, wie z. B. Drehstabfedern einander identisch sein können.

Zweckmässigerweise sind zwei der Laufrollenwiegen tragenden Tragarme zueinander gerichtet, wodurch zwischen den Anlenkpunkten der Tragarme an der Fahrzeugwanne ein verhältnismässig weiter Bereich frei von den Drehstabfedern und Lagerungselementen bleibt, der besonders zur Anordnung des Drehturms eines gepanzerten Kettenfahrzeugs genutzt werden kann.

Weitere Merkmale und Vorteile ergeben sich aus der nachfolgenden Beschreibung eines Ausführungsbeispiels anhand der Zeichnung und in Verbindung mit den Ansprüchen.

Es zeigen:

Fig. 1 die Seitenansicht eines Gleisketten-Laufwerks in schematischer Darstellung und_

Fig. 2 die Seitenansicht einer weiteren Ausführungsform eines Gleisketten-Laufwerks in schematischer Darstellung.

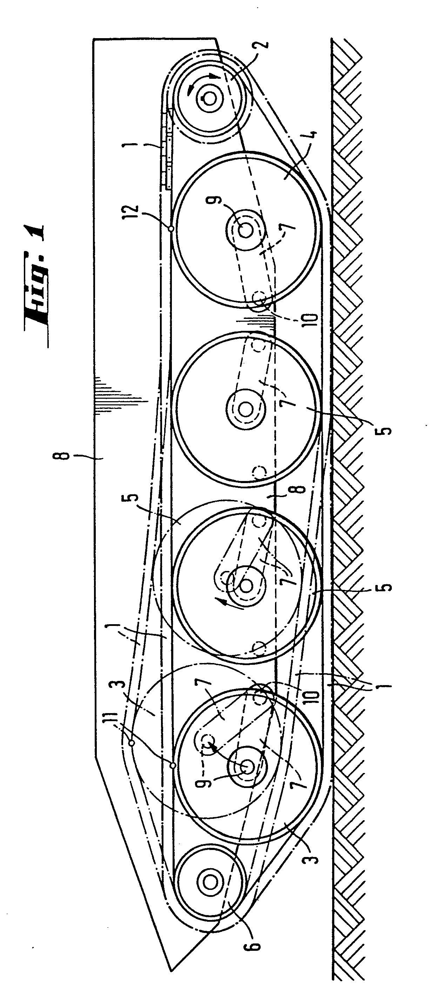

In Fig. 1 ist mit 1 die Gleiskette eines Kettenfahrzeugs bezeichnet, die über ein Triebrad 2, ein vorderes und ein hinteres Eckrad 3 und 4, Laufrollen 5 sowie ein Umlenkrad 6 geführt ist. Die Eckräder 3 und 4 und die Laufrollen 5 sind an Tragarmen gelagert, die an der Fahrzeugwanne 8 des Kettenfahrzeugs angelenkt sind. Der Lagerpukt 9 des vorderen und des hinteren Eckrades 3 und 4 liegt jeweils höher als der Anlenkpunkt 10 des zugehörigen Tragarms 7 an der Fahrzeugwanne 8. Das je nach Fahrtrichtung zu oder ablaufende Kettentrum der Gleiskette 1 kommt nach Umschlingung des dem Eckrad 3 bzw. 4 zugeordneten Umlenkrades 6 bzw. Triebrades 2 auf den Eckrädern 3 und 4 an den Auflagepunkten 11 und 12 zur Auflage. Die Darstellung in strichpunktierten Linien zeigt das Gleisketten-Laufwerk im eingefederten Zustand. Dabei wird die durch den Einfederungsvorgang im unteren Kettentrum sich ergebende Längung durch die Ausbuchtung des oberen Kettentrums durch das Eckrad 3 und die nachfolgende Laufrolle 5 ausgeglichen.

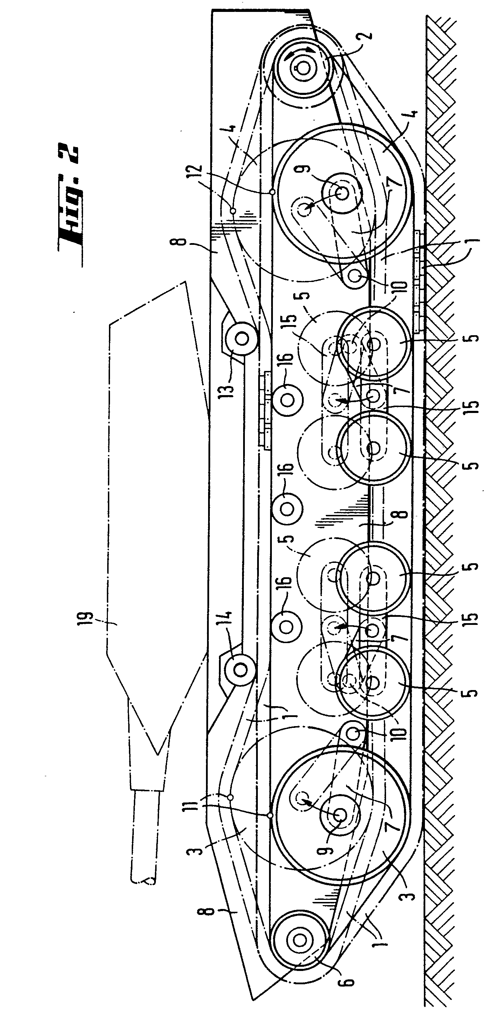

In der Ausführungsform nach Fig. 2 haben die Laufrollen 5 einen kleineren Durchmesser als die Eckräder 3 und 4. Oberhalb des oberen Kettentrums befinden sich zwei Umlenkvorrichtungen 13 und 14 durch die die Gleiskette 1 von den Auflagepunkten 11 und 12 an den Eckrädern 3 und 4 nach unten geführt wird. Die Umlenkvorrichtungen 13 und 14 sind an der Fahrzeugwanne 8 befestigt, die in den zwischen den Umlenkvorrichtungen befindlichen Raum oberhalb der Gleiskette übergreift. Die Umlenkvorrichtungen sind im hier dargestellten Ausführungsbeispiel als Rollen ausgebildet, es sind jedoch auch Umlenkvorrichtungen in Form von Gleitschuhen denkbar.

An den beiden Tragarmen 7 für die Laufrollen 5 sind Laufrollenwiegen 15 angelenkt, an deren Enden jeweils zwei Laufrollenpaare gelagert sind. Die beiden Tragarme 7 sind zueinander gerichtet, wodurch deren Anlenkpunkte 10 in weitem Abstand voneinander zu liegen kommen. Der dazwischen befindliche Bodenbereich der Fahrzeugwanne 8 ist daher frei von den Drehstabfedern und den Lagerelementen (nicht dargestellt), mittels derer die Tragarme 7 in der Fahrzeugwanne 8 federnd abgestützt sind. Dieser Bereich ist daher besonders für die Anordnung des Drehturms 19 (Darstellung in strichpunk

tierten Linien) eines Panzerfahrzeugs geeignet. Diese Massnahme, sowie die Anordnung kleinerer Laufrollen mit darüber angeordneten Umlenkvorrichtungen und übergreifender Fahrzeugwanne ermöglichen für ein Gleisketten-Panzerfahrzeug eine niedrige Silhouette.

Die Darstellung des Laufwerks in Vollinien zeigt dieses im statischen Belastungszustand, wohingegen die Darstellung in strichpunktierten Linien das Laufwerk im voll eingefederten Zustand zeigt. Die beim Einfederungsvorgang des Eckrades 3 und 4 und der Laufrollen 5 sich ergebende überschüssige Kettenlänge wird dadurch kompensiert, dass das obere Kettentrum über das eingefederte Eckrad 3 bzw. 4 und die Umlenkvorrichtung 13 bzw. 14 eine verlängerte Wegstrecke durchlaufen muss, deren Verlängerung der überschüssigen Kettenlänge weitgehend entspricht.

Zur Vermeidung von Schwingungen oder Störeinflüssen auf die Laufrollen 5 kann der zwischen den Umlenkvorrichtungen 13 und 14 befindliche Kettenstrang noch über starr gelagerte Stützrollen 16 geführt sein.

## Patentansprüche

1. Gleisketten-Laufwerk für ein Kettenfahrzeug, insbesondere für ein gepanzertes Kettenfahrzeug, mit einer über ein Triebrad (2), ein Umlenkrad (6) und Laufrollen (3, 4, 5) geführten Gleiskette (1) sowie mit an der Fahrzeugwanne (8) des Kettenfahrzeugs an Anlenkpunkten federnd abgestützten Tragarmen (7), an denen die Laufrollen (3, 4, 5) gelagert sind, dadurch gekennzeichnet, dass von den Laufrollen (3, 4, 5) zumindest die bei Vorwärts- und Rückwärtsfahrt als Eckräder (3, 4) beanspruchten Laufrollen einen so grossen Durchmesser aufweisen, dass das obere Kettentrum der Gleiskette (1) auf den Eckrädern (3, 4) sowohl im statischen Belastungszustand wie auch in der eingefederten Eckradstellung aufliegt und der Anlenkpunkt (10) des ein Eckrad (3, 4) tragenden Tragarms (7) an der Fahrzeugwanne (8) im statischen Belastungszustand tiefer liegt als der Lagerpunkt (9) des Eckrades (3, 4), der im Bereich zwischen dem Umlenkrad (6) bzw. dem Triebrad (2) und dem Anlenkpunkt (10) des zugehörigen Eckradtragarms (7) verschwenkbar ist.

2. Gleisketten-Laufwerk nach Anspruch 1, dadurch gekennzeichnet, dass die zwischen den Eckrädern (3, 4) liegenden Laufrollen (5) einen kleineren Durchmesser aufweisen als die Eckräder (3, 4) und im Abstand vom oberen Kettenaufliegepunkt (11, 12) der Eckräder (3, 4) auf der dem Umlenkrad (6) bzw. dem Triebrad (2) abgewandten Seite in Höhe der im statischen Belastungszustand befindlichen Obergrenze der Gleiskette (1) je eine Umlenkvorrichtung (13, 14) angeordnet ist.

3. Gleisketten-Laufwerk nach Anspruch 2, dadurch gekennzeichnet, dass die Fahrzeugwanne (8) in den zwischen den Umlenkvorrichtungen (13, 14) befindlichen Raum oberhalb der Gleiskette (1) seitlich übergreifend erweitert ist.

4. Gleisketten-Laufwerk nach Anspruch 1 bis 3, dadurch gekennzeichnet, dass die zwischen den Eckrädern (3, 4) befindlichen Laufrollen (5) auf an den Tragarmen (7) angelenkten Laufrollenwiegen (15) gelagert sind und die Tragarme der Laufrollen und der Eckräder einander entsprechende Federungsvorrichtungen aufweisen.

5. Gleisketten-Laufwerk nach Anspruch 4, dadurch gekennzeichnet, dass zwei Laufrollenwiegen (15) vorgesehen sind, deren Tragarme (7) derart zueinander gerichtet sind, dass ihre Anlenkpunkte (10) in weitem Abstand voneinander zu liegen kommen.

6. Gleisketten-Laufwerk nach Anspruch 1 bis 5, dadurch gekennzeichnet, dass die Tragarme (7) der Laufrollen (5) bzw. der Laufrollenwiegen (15) den Tragarmen (7) der Eckräder (3, 4) entsprechen.

7. Gleisketten-Laufwerk nach Anspruch 2, dadurch gekennzeichnet, dass zwischen den Umlenkvorrichtungen (13, 14) starr gelagerte Stützrollen (16) angeordnet sind.

## Claims

1. Track running gear for an articulated track vehicle, and more specially for an armored tracked vehicle, comprising a track (1) running over a driving wheel (2), a bend wheel (6) and idler wheels (3, 4 and 5) and support arms (7) that are supported springingly on the lower casing (8) of the tracked vehicle at pivot points, the idler wheels (3, 4 and 5) being bearinged on the arms (7), characterized in that of the idler wheels (3, 4 and 5) at least those loaded as corner wheels when the vehicle is moving backwards and forwards have such large diameters that the top run of the track (1) is rested on the corner wheels (3 and 4) not only in the static loading condition by furthermore in the condition in which the corner wheels are moved inwards against spring means and the pivot point (10) of the support arm (7) having a corner wheel (3 and 4) is at a lower level in the static loading condition than the bearing point (9) of the corner wheel (3 and 4), that is able to be rocked between the bend wheel (6) or the driving wheel (2) and the pivot point (10) of the corner wheel support (7) used therewith.

2. The track running gear as claimed in claim 1 characterized in that the idler wheels (5) placed between the corner wheels (3 and 4) have a smaller diameter than the corner wheels (3 and 4) and in that at a point spaced from the top point (11 and 12) at which the track comes onto the corner wheels (3 and 4) on the other side of the top limit of the track (1), in the of static loading condition, to the bend wheel (6) or the driving wheel (2) there is in each case a bend unit (13 and 14).

3. The track running gear as claimed in claim 2 characterized in that the lower casing (8) of the vehicle is made wider so as to have a degree of side overhang in the space, between the bend units (13 and 14), at a higher level than the track (1).

4. The track running gear as claimed in claims 1 to 3 characterized in that the idler wheels (5) between the corner wheels (3 and 4) are bearinged on the idler wheel rockers (15) that are pivoted on the support arms (7) and the support arms of the idler wheels and of the corner wheels have springing means that are the same as each other.

5. The track running gear as claimed in claim 4 characterized in that there are two idler wheel rockers (15), whose support arms (7) are so directed towards each other that their pivot points (10) are moved to widely spaced points.

6. The track running gear as claimed in claims 1 to 5 characterized in that the support arms (7) of the idler wheels (5) and of the idler wheel rockers (15) are the same as the support arms (7) of the corner wheels (3 and 4).

7. The track running gear as claimed in claim 2 characterized in that fixedly positioned support wheels (16) are placed between the bend units (13 and 14).

## Revendications

1. Train de roulement pour chenille pour un véhicule chenillé, en particulier pour un véhicule chenillé blindé, comportant une chenille (1) guidée par l'intermédiaire d'un barbotin (2), d'un galet de renvoi (6) et de galets de roulement (3, 4, 5), ainsi que des bras de support (7) prenant appui élastiquement en des points d'articulation sur la caisse (8) du véhicule chenillé et sur lesquels les galets de roulement (3, 4, 5) sont montés, train caractérisé par le fait que, parmi les galets de roulement (3, 4, 5), au moins les galets de roulement sollicités en tant que galets d'extrémité (3, 4) lors de la marche avant et de la marche arrière présentent un diamètre tellement grand que le brin suprérieur de la chenille (1) repose sur les galets d'extrémité (3, 4) aussi bien à l'état de contrainte statique que dans la position de rétraction élastique des galets d'extrémité, et que le point d'articulation (10) du bras de support (7) supportant un galet d'extrémité (3, 4) occupe à l'état de contrainte statique, sur la caisse (8) du véhicule, une position plus basse que le point de portée (9) du galet d'extrémité (3, 4) pouvant effectuer des pivotements dans la zone comprise entre le galet de renvoi (6) ou le barbotin (2) et le point d'articulation (10) du bras associé (7) de support d'un galet d'extrémité.

2. Train de roulement pour chenille selon la revendication 1, caractérisé par le fait que les galets de roulement (5) situés entre les galets d'extrémité (3, 4) présentent un diamètre plus petit que les galets d'extrémité (3, 4); et par le fait que, à distance du point supérieur de contact (11, 12) de la chenille sur les galets d'extrémité (3, 4), du côté opposé au galet de renvoi (6) ou au barbotin (2), un dispositif respectif de renvoi (13, 14) est installé à la hauteur de la délimitation supérieure de la chenille (1) à l'état de contrainte statique.

3. Train de roulement pour chenille selon la revendication 1, caractérisé par le fait que la caisse (8) du véhicule est élargie en retombant de part et d'autre dans l'espace situé entre les dispositifs de renvoi (13, 14) au-dessus de la chenille (1).

4. Train de roulement pour chenille selon la revendication 1 à 3, caractérisé par le fait que les galets de roulement (5) situés entre les galets d'extrémité (3, 4) sont montés sur des biellettes (15) articulées sur les bras de support (7), les bras de support des galets de roulement et des galets d'extrémité présentant des dispositifs de suspension correspondant les uns aux autres.

5. Train de roulement pour chenille selon la revendication 4, caractérisé par le fait que sont prévues deux biellettes (15) associées aux galets de roulement, dont les bras de support (7) sont dirigés l'un vers l'autre de telle façon que leurs points d'articulation (10) soient largement distants l'un de l'autre.

6. Train de roulement pour chenille selon la revendication 1 à 5, caractérisé par le fait que les bras de support (7) des galets de roulement (5) ou des biellettes (15) associées aux galets de roulement correspondent aux bras de support (7) des galets d'extrémité (3, 4).

7. Train de roulement pour chenille selon la revendication 2, caractérisé par le fait que des galets de soutien (16) montés rigidement sont intercalés entre les dispositifs de renvoi (13, 14).

Fig. 1

0 030 002

_Fig. 2_